(19) Europäisches Patentamt
European Patent Office
Office européen des brevets

(11) **EP 2 499 462 B1**

(12) **EUROPEAN PATENT SPECIFICATION**

(45) Date of publication and mention
of the grant of the patent:
**23.03.2016 Bulletin 2016/12**

(21) Application number: **10788371.2**

(22) Date of filing: **12.11.2010**

(51) Int Cl.:
*G01D 4/00* (2006.01)  *H02J 13/00* (2006.01)

(86) International application number:
**PCT/GB2010/002093**

(87) International publication number:
**WO 2011/058328 (19.05.2011 Gazette 2011/20)**

(54) **EVENT IDENTIFICATION**

**IDENTIFIZIERUNG VON EREIGNISSEN**

**IDENTIFICATION D'ÉVÉNEMENTS**

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **12.11.2009 GB 0919785
19.02.2010 US 306195 P**

(43) Date of publication of application:
**19.09.2012 Bulletin 2012/38**

(73) Proprietor: **Onzo Limited
London
NW1 5DH (GB)**

(72) Inventors:
• **SANCHEZ LOUREDA, Jose Manuel
London SW18 2QR (GB)**
• **WESTBROOKE, Adam, Richard
Kent TN14 5AQ (GB)**

(74) Representative: **Hill, Justin John et al
Olswang LLP
90 High Holborn
London WC1V 6XX (GB)**

(56) References cited:
**WO-A1-2008/142431     WO-A1-2009/014995
WO-A2-2009/103998     WO-A2-2010/106253
DE-A1- 19 535 719**

• **HART G W: "NONINTRUSIVE APPLIANCE LOAD
MONITORING", PROCEEDINGS OF THE IEEE,
IEEE. NEW YORK, US, vol. 80, no. 12, 1 December
1992 (1992-12-01), pages 1870-1891,
XP000336363, ISSN: 0018-9219, DOI:
DOI:10.1109/5.192069**

EP 2 499 462 B1

## Description

### Field of the Invention

This invention relates to methods, systems, devices and computer code for identifying events associated with consumption of utilities, in particular consumption of gas, water and electricity, and using measured utility consumption data for applications such as analysis of household power consumption by an end-user or by a utility supplier, or monitoring occupancy and activity within a household.

### Background

There is an ongoing and urgent need to reduce consumption of energy and water both for environmental and cost reasons.

A large proportion of the energy and water supplied by utilities suppliers is wasted as a result of inefficiencies such as use of electrical appliances that have poor efficiency or for behavioural reasons such as appliances that are left switched on and so consume electricity even when not in use, or excessive consumption of water. This leads to wastage and increased utilities costs. Moreover, with respect to electricity, electrical energy use in buildings accounts for a very large proportion of all carbon emissions. Demand for utilities can vary dramatically between identical buildings with the same number of occupants, and this suggests that reducing waste through behavioural efficiency is essential. Therefore, efforts are required to change the patterns of utilities use by consumers.

The utilities suppliers recognise three major obstacles to progress in this objective: a shortage of sources of competitive advantage, a lack of detailed understanding of their customers, and a lack of "touch points", i.e. ways of interacting with the customers. Opportunities for differentiation revolve mainly around price and "green" issues, i.e. reduction of environmental impact. The utilities suppliers have very little information about their customers' behaviour since electricity, gas and water meters collect whole house data continuously and are read infrequently.

Meters to measure total consumption of utilities of a household are commonplace for each of gas, electricity and water, however this total is not useful in identifying areas in which efficiencies may be possible (for brevity, we refer herein to a "household", however it will be appreciated that the present invention is not limited to a domestic house but may be applied to any domestic, workplace or other setting that receives its own discrete utilities supplies, in particular mains electricity supply from an electricity grid; water supply; and / or gas supply.).

A clamp-on energy meter for monitoring the consumption of electricity supplied on a cable is disclosed in WO 2008/142431. While a meter of this type is beneficial in assisting a user to review energy consumption patterns, there remains a need for yet more detailed information on user consumption of utilities supply, in particular electricity and water.

The document HART G W: "NONINTRUSIVE APPLIANCE LOAD MONITORING", PROCEEDINGS OF THE IEEE, IEEE. NEW YORK, US, vol. 80, no. 12, 1 December 1992 (1992-12-01), pages 1870-1891, XP000336363,discloses a method of load identification according to the state of the art.

It is therefore an object of the invention to provide technical means for generating detailed information on utilities consumption within a household.

### Summary of the Invention

The present inventors have found that it is possible to identify events associated with consumption of utilities (for example the filling of a sink with water or the switching on of a kettle) based on data derived from measurements of utility consumption.

For instance, operation of any given electrical appliance makes a series of power demands in a certain order, giving it a unique power "signature" associated with operation of that appliance. Data derived from measurements of the changes in power demand of a household over time can be analysed to identify events associated with operation of known appliances in order to match the electricity consumption of appliances in a household to known appliances and to provide detailed information of energy consumption associated with each identified appliance.

"Appliance" as used herein means any device that consumes one or more supplied utility, in particular gas, electricity or water.

Accordingly the invention relates to a method and apparatus as defined in claims 1-15.

### Description of Figures

The invention will now be described in detail with reference to the following figures in which:

Figure 1 is a flowchart illustrating measuring, analysis and matching steps according to the method of the invention.

Figure 2 illustrates the identification of "corners" in electricity consumption data.
Figure 3 illustrates schematically the identification of missing corners.
Figure 4 is a flowchart illustrating the corner detection algorithm.
Figure 5 illustrates a matching step according to the invention.
Figure 6 is a event identification architecture flowchart illustrating alternative measuring, analysis and matching steps according to the method of the invention.
Figure 7 schematically illustrates apparatus for implementation of the method of the present invention.
Figure 8 schematically illustrates a event identification device
Figure 9 is a simplified functional block diagram of a computer that may be configured as a host or server, for example, to function as the event identification device in the system of Figure 8; and
Figure 10 is a simplified functional block diagram of a personal computer or other work station or terminal device.

**Detailed Description of the Invention**

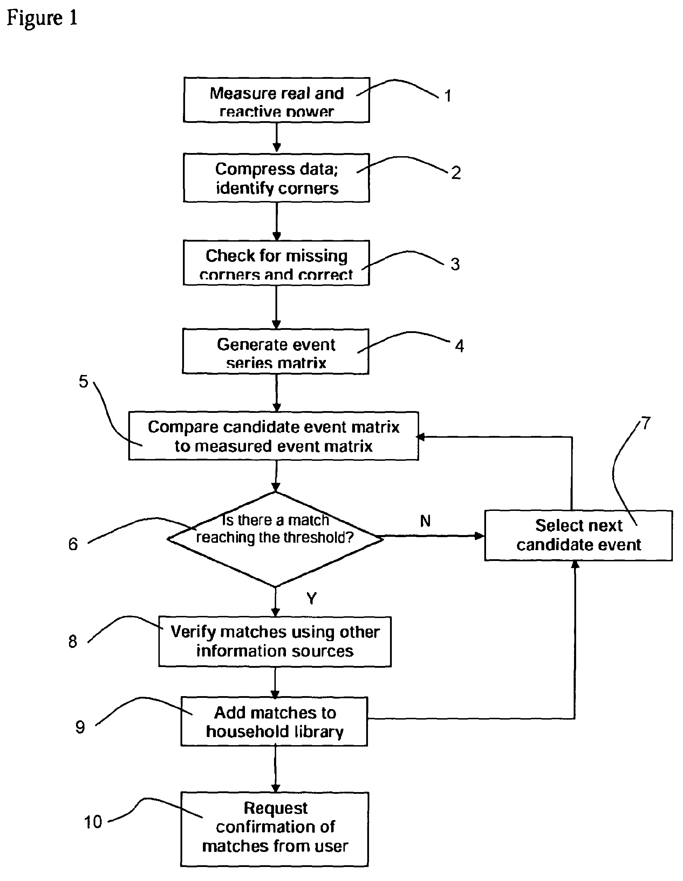

The method of the invention is illustrated in Figure 1 with respect to electricity consumption, and may be divided into three broad steps: (A) Measurement of electrical data at regular measurement points, in particular at regularly spaced time points; (B) Creation of an electricity consumption profile based in particular on changes in electricity demand, in particular power, between measurement points; and (C) Matching events within the measured electricity consumption profile to energy consumption profiles stored in a database and associated with a known event.

Each of these steps is described in more detail below. While the invention is described hereinafter primarily with respect to measurement and analysis of electricity consumption, in order to identify events and appliances associated with consumption of electricity, it will be appreciated that the same steps may equally be taken using data relating to consumption of gas or water utilities.

A) Measurement

A sensing device such as a clamp-on energy meter as disclosed in WO 2008/142431 measures real and reactive power at fixed time points in step 1. A higher frequency of measurement will obviously yield more electricity consumption data, which in turn increases the likelihood of an accurate match when the profile generated from the measured data is compared to stored electricity consumption profiles. Typically, electricity consumption is measured at least once every second. This is captured as two separate streams of data, one stream of data comprising measurements of real power consumption, and the other stream of data comprising measurements of reactive power consumption ("real power" and "reactive power" as used herein have the meanings as understood by a skilled person in the art in relation to power supplied to a load from an alternating current source). One advantage of measuring both real and reactive power is that, between them, it is possible to measure power demand of most or all appliances. For instance, it may be difficult or impossible to obtain a meaningful measurement of real power for certain appliances such as set-top boxes, however reactive power for these devices can be measured.

Also measured is energy consumed at fixed time intervals, typically every second. From this can be calculated a running total of energy consumed over longer periods, for example every 512 seconds, 2048 seconds or 86,400 seconds (24 hours). These measurements can also be used to show the maximum and minimum energy usages over one of these longer time periods. Although these energy consumption measurements are not used in generating an "event matrix" as described in more detail below, this information is nevertheless beneficial in providing a detailed picture of energy consumption over the course of an extended time period during which various appliances may be switched on and off.

Consumption of water and gas can be measured using techniques that are well known to the skilled person, for example based on use of water and gas meters. Water and gas consumption, in particular water consumption, may be measured at a lower rate, for example at least once every 300 seconds or at least once every 60 seconds, in order to generate water consumption data that may be used to identify events associated with consumption of water. The rate of flow of water or gas at each time interval may be measured, along with the total volume consumed over time in a manner analogous to power and energy measurements of electricity consumption. Additionally or alternatively, water and gas consumption may be measured at measurement points after intervals of volume consumption rather than intervals of time, for example a measurement of time elapsed for each unit volume (e.g. litre) of water to be consumed.

B) Compression

As shown in Figure 1, the electricity consumption data relating to real and reactive power is fed into a compression algorithm, referred to hereinafter as a "corner detection algorithm" to compress the data in step 2.

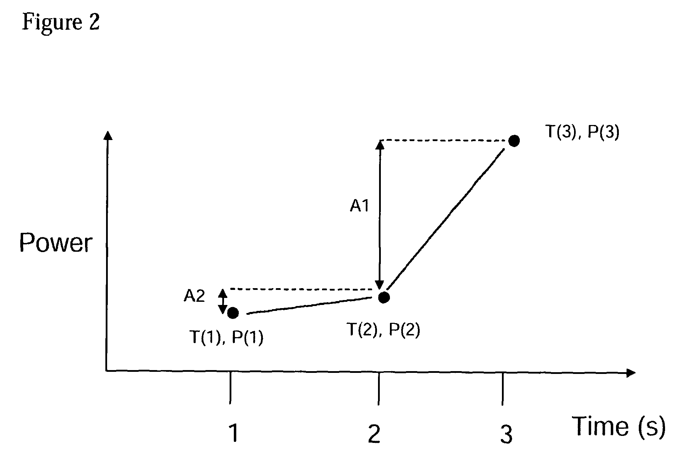

The operation of the corner detection algorithm is illustrated schematically in Figure 2. The compression algorithm identifies "corners" in power demand by identifying differences in the gradient representing rate of change in power from one time point to the next. A point at which there is change in gradient between two time intervals (identified as T(2), P(2)) is marked as a "corner" if that change is greater than a predetermined threshold. This is done by measuring the power difference between points T(3), P(3) and T(2), P(2) and between T(2),P(2) and T(1),P(1) to give values A1 and A2 respectively. If the difference B between A1 and A2 exceeds a predetermined value Toll then a corner is marked.

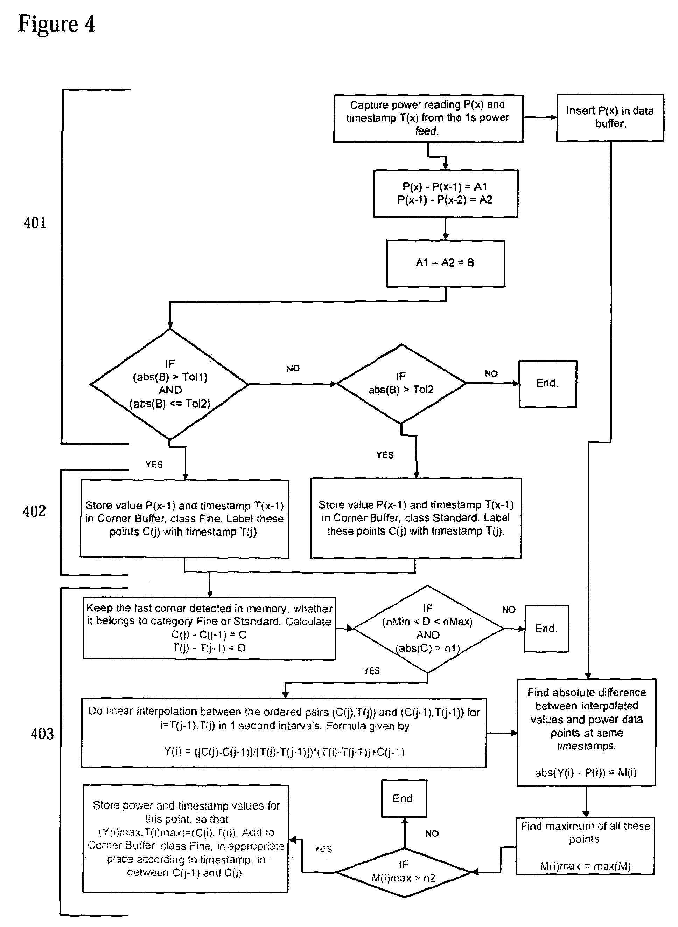

The operation of the algorithm is illustrated in more detail in Figure 4 in which:

T(x), T(i) and T(j) represent 32 Bit timestamps
C(x), C(j) and Y(i) represent 16 Bit power readings at a corner
Toll, Tol2 represent integer numerical values (0-100)
AI, A2, B represent 16 Bit power reading differences
n1, nMax, nMin, n2 represent 16 Bit numerical values
M(i), M(i)max represent 16 Bit numerical values

Section 401 of Figure 4 illustrates identification of corners as described above with reference to Figure 2.

Section 402 of Figure 4 illustrates the classification of corners into "Standard" and "Fine" classes depending, respectively, on whether B is greater than predetermined values Toll and Tol2 or greater than Toll only.

The skilled person will understand how to select the value of the threshold for marking a point as a corner, and the specific value will vary from case to case. In order to avoid incorrect identification of background noise in identification of a corner, only those points having signal strength greater than a minimum multiple of background noise strength may be used in corner identification.

By measuring a plurality of these corners in the electricity consumption data, an electricity consumption profile is generated, representing a series of events associated with changes in power demand from which appliances may be identified using known "signature" profiles of those appliances.

Correction

The electricity consumption profile generated as described above with respect to Figure 2 and sections 401 and 402 of Figure 4 contains the majority of corners; however a correction may be applied to identify one or more corners that may have been missed in step 3.

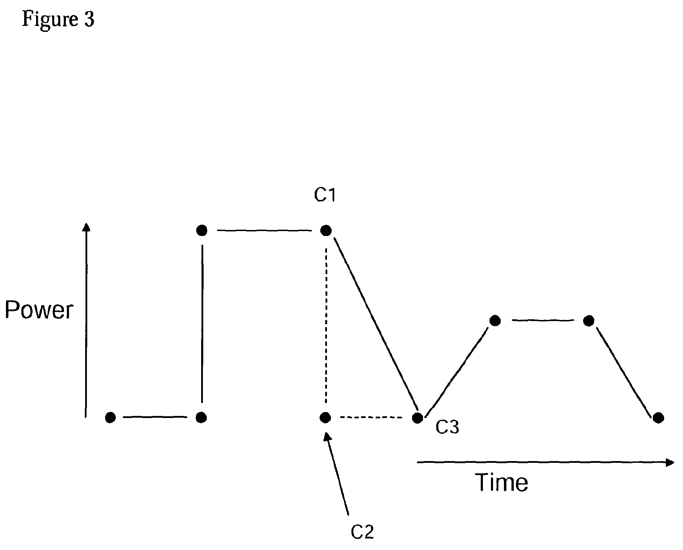

This is illustrated in Figure 3 which shows a corner C(2) between corners C(1) and C(3) that has been missed by the corner detection algorithm.

A missing corner may be identified if both the power difference (power at C1-power at C2) and the time difference (time at C1 -time at C2) fall outside defined values as illustrated in section 403 of Figure 4.

In this event, a linear interpolation may be conducted to identify any missing corners, as illustrated in Section 403 of Figure 4. Referring to Figure 3, missing corner C3 should be inserted at the point giving the most acute angle between lines C1-C2 and C2-C3.

C) Matching

The electricity consumption profile may be represented in the form of a matrix representing the various events that occurred during the period that electricity consumption was measured. The event series generated by steps 1 to 3 is used to generate a matrix in step 4. For example, if a refrigerator was switched on during the period of electricity consumption measurement then the signature profile associated with that event may be as follows:

$$\text{Time} \longrightarrow \begin{array}{cc} \text{Event} & \\ \text{Start} & \text{Finish} \\ \begin{bmatrix} 1 & 0 & 4 & 7 \end{bmatrix} \end{array}$$

or as follows:

Event
Start        Finish

Time        $\longrightarrow$        $\begin{bmatrix} 1 & 2 & 4 & 7 \end{bmatrix}$

The electricity consumption profile may be analysed to determine if it contains a signature event series stored in a database. For example, to determine if the electricity consumption profile contains an event series indicative of a refrigerator switching on. The event series of one or more candidate appliances stored in a database may be compared to the measured profile in step 5. For example, in order to identify whether the measured profile contains an event series matching that of a refrigerator switching on.

The matrix below illustrates an example of the output from matching of a number of candidate events to the above event matrix. In this case, the first row shows a good match between the measured profile and the event to which it was compared. The further rows show poorer matches, indicating that the measured event probably corresponds to the candidate event of the first row.

Event
Start        Finish

Time        $\longrightarrow$        $\begin{pmatrix} 1 & 1 & 1 & 1 \\ 1 & 0 & 1 & 1 \\ 0 & 1 & 0 & 1 \\ 0 & 0 & 0 & 1 \end{pmatrix}$

In this way, the probability of a given appliance being present in the household can be determined. If this probability exceeds a threshold value then that appliance is assumed to be present in the household in step 6. If on the other hand the probability falls below a threshold then that appliance is assumed not to be in the household in step 6, and the next candidate event is selected for comparison to the measured event in step 7. For instance, an event series represented by one row of the matrix may form a good match with the event series of an appliance in the database, and so the data in that row can be attributed to an identified appliance.

Parameters associated with an event that may be used to determine a match include the following:

Minimum change in power
Maximum change in power
Minimum change in time
Maximum change in time
Peak power minimum
Peak power maximum
Minimum power change time after time 0
Maximum power change time after time 0
Minimum time to next event
Maximum time to next event
Power threshold (the minimum power change between measurement points).

These parameters may be determined by measuring event series of known appliances. Each of these parameters may be determined for each specific make and model of an appliance and / or may be a generic parameter to be used for any member of a genus of appliances (for example, the genus of washing machines) wherein the generic parameter is determined by measuring a plurality of devices within a genus and determining a parameter value that is applicable to most or all members of the genus.

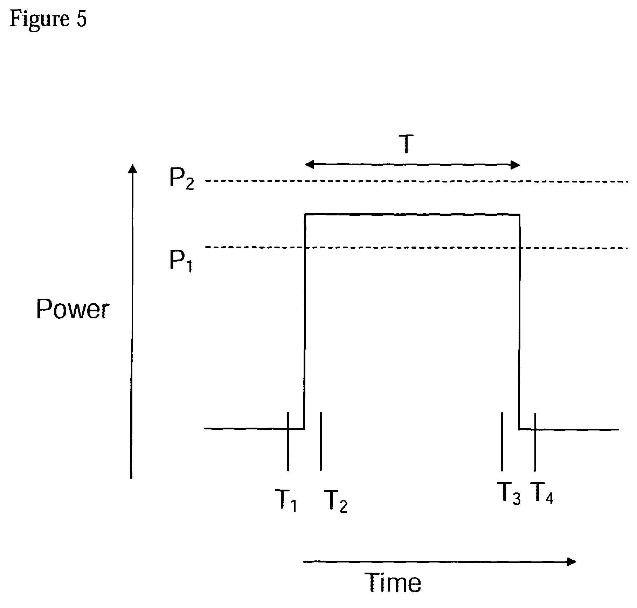

This is illustrated schematically in Figure 5, which illustrates a matching step wherein a match may be based on one or more of: an event occurring at a first time point between T1 and T2; the event having an associated power falling between P1 and P2; and a time T until the next event occurring at a time point between T3 and T4.

Weighting may be applied to the event matrix in order to improve the accuracy of matching. For example, one entry within the event matrix may be associated with high power consumption that may be given higher weighting than other entries that may be lower power, and that may be easier to confuse with background electricity consumption.

For any given event, the event series contained within the database comprises a plurality of entries showing at least one power change indicative of an event. Typically, the event comprises a plurality of changes in power value, the magnitude and duration of which can be used to generate a signature event series for that event. However, it is possible that a single change in power value could be stored as an event series within the database, in particular if the magnitude of that change is large enough to provide a distinctive event series.

Different techniques can be used in identification of different appliance genera. Suitable techniques for any given genus will be apparent to the skilled person following measurement and analysis of event series for known appliances within each genus.

For example, a kettle profile can be characterised by an on event, followed by a similar off event after a defined amount of time has elapsed (this amount of time is defined by parameters derived from typical kettle usage). Since kettles may be of different sizes, a broad search in on event magnitudes and duration is firstly carried out in the electricity consumption data for the whole household, yielding matrices with all appliances satisfying those parameters. These results, since they tend to be different instances of appliance usage, tend to form clusters when one plots the on event power magnitude against the duration in time between their respective on and off events. Then a finite mixtures model based clustering method may be used to automatically select the most likely candidate kettle cluster. Other attributes can be calculated from this information, such as an estimate of the amount of water boiled in each kettle use.

On the other hand, in the case of a washing machine, a plurality of discrete events can be identified in relation to operation of a washing machine, such as heating and spin cycle events. Individually, these are simple on/off events, which can be detected individually. Independent analysis of these individual components can then be combined and further analysed to identify a washing machine. Using this information, one can then use a similar method of clustering to determine which is the most likely heating element which corresponds to the washing machine, in order to calculate the energy used, and temperature of the wash cycle, for example.

Thus, in one embodiment an appliance may be detected by identifying an event associated with only part of the operation of that appliance. In particular, by measurement of event series associated with known devices, certain events may be identified as being more prominent than other events (for example due to a power change associated with that event that is particularly characteristic of the appliance genus in question) and may be used as the primary event in the process of appliance detection. Other events determined to be associated with the detected appliance may be used to verify the accuracy of the match and / or to determine parameters such as the amount of energy used by the appliance.

Thus, using information derived from measurement and analysis of electricity consumption profiles of known appliances, the skilled person may identify mathematical techniques suitable for identification of any given appliance or any appliance genus such as the finite mixtures model based clustering technique described above, or other techniques such as hidden Markov models.

In this way, use of known appliance event series for common household appliances allows estimation of most or all of the constituents of measured electricity consumption data for the entire household, and allows for disaggregation of signals associated with operation of more than one appliance.

The appliance may be any appliance to which power is supplied via mains electricity including but not limited to kitchen appliances such as fridges, freezers, microwave ovens, electrical cookers, washing machines, tumble dryers and dishwashers; leisure appliances such as televisions, hi-fis, set-top boxes, video or dvd players or recorders; game consoles; and other appliances such as electric boilers, central heating water pumps, pool pumps, air conditioning units, personal computers, vacuum cleaners, irons and lawn mowers.

Following an initial match of a measured event series to an event series stored in the database associated with a specific appliance, the confidence in accuracy of identification of that appliance may be increased by looking for one or more further event series corresponding to other events associated with operation of that appliance. Furthermore, certain appliances may have event series that occur cyclically, for example a refrigerator. If a match is identified for such an appliance then the match may be verified by checking for this cyclic pattern.

A detected event is not necessarily associated with operation of an appliance. For instance, a power cut or other abnormality in the power supply may possess an identifiable event series.

Databases

As set out above, the event series of one or more candidate appliances stored in a database may be compared to the measured profile in order to identify whether the measured profile contains a profile matching that of a stored event series.

One or more databases may be checked for the purpose of event matching, including but not limited to:

i) A specific appliance database comprising event series associated with specific appliances, such as event series for a plurality of different makes and models of appliances. A database of this type has the advantage of being able to determine very specifically the make and model of devices present in a household.

ii) A generic appliance database comprising event series that are common to genera of devices. For example, the genus of washing machines will all have similar event series such as event series associated with heating or spin cycles, and those similar event series may be used to create a single, generic event series for the event in question. By measuring event series for a plurality of different makes and models of devices it is possible to identify appliance genera and at least one generic event series common to each member of an appliance genus. Use of a generic database of this type has the advantage of being smaller than a database containing event series for a plurality of makes and models of appliances within each genus, and also allows for faster matching.

Initially, a generic event series may be generated using only two event series associated with two different appliances of a common genus, such as the spin cycle of two different models of washing machine. In order to increase matching accuracy for a given event or appliance, each generic event series may be changed over time as event series for known appliances within the same appliance genus are measured.

iii) A household database specific to the household for which utility consumption data is analysed. Following the initial identification of events occurring within a household and the associated appliances, a database specific to that household may be created, and the contents of this database may be used to quickly identify future events based on previously measured occurrences of those events or previous identification of the associated appliance. The speed and accuracy of event matching using a household database may increase as utility consumption data is measured over time. Use of the household database in this way allows for real-time identification of events and appliances, which may be communicated to a system user either local to or remote from the household.

Multiple data sources

A measured event may be identified based on probability of a match derived from the event matrix alone, however one or more further data sources may be taken into account in order to verify the match in step 8 (for the avoidance of doubt, "verify" as used herein means increasing the confidence in a match being correct or increasing the calculated probability of a match being correct, and does not necessarily mean determining with absolute certainty that a match is correct). It will be appreciated that any sensor within a household may provide further this further data, including but not limited to the following:

-    Water consumption for appliances such as washing machines. For example, if an event associated with a washing machine is identified as a match then the confidence in an accurate match may be increased by determining if water was consumed at the same time as electricity was consumed for the relevant event series. In a more sophisticated analysis, measurement of a household's water demand over time may be used to identify water consumption signatures of appliances present in the household that can be matched to known water consumption signatures of known appliances. For instance, a water consumption signature may be based on changes in rate of water consumption with time in a manner analogous to the electrical appliance signatures described above.

-    Gas consumption for appliances that consume both gas and electricity in the same way as water consumption described above.

-    Temperature of appliances that change temperature with use, for example refrigerators, freezers and boilers.

-    Temperature difference between household ambient temperature and external temperature.

-    Movement sensors such as passive infrared sensors to determine if a household is occupied. For example if no movement is sensed within the household then it may be inferred that the household is empty in which case the confidence in accuracy of a match for an appliance that is used during occupancy, such as a television, is reduced. On the other hand, the confidence in accuracy of a match for other appliances, such as refrigerators, may remain unchanged. The use of movement sensor data to verify a match may take into account the time at which an event series is detected (e.g. day or night) and / or the length of time since a movement was last sensed.

-    Probability data in particular data derived from:

i) Inferred data. If certain appliances are present in a household then probability of certain other appliances being present may be inferred. For example, if a DVD player is present then it may be inferred that a television is present.

ii) Socio-economic data, seasonal data and / or geographic data that may indicate a high probability of a certain appliances being present. For example the probability of an appliance being present in a household will vary based on the nature of the household (e.g. domestic or office) and the geographic location of the household. With respect to location of the household, factors affecting the likelihood of a given appliance being present in a given household may include demographics of household residents in the area in which the household is located. Similarly, the climate in the location of the household may affect the likelihood of certain appliances being present - for instance, likelihood of heating appliances being present and in use is higher in relatively cold climates whereas likelihood of cooling appliances being present an in use is likewise higher in warmer climates. iii) Behavioural data. For example, a possible match with an event series associated with operation of a lawnmower may be verified if the relevant event series occurred during the day, however the match may be discarded or accorded a lower probability of being accurate if the relevant event series occurred at night. The use of certain appliances may also vary over the course of a year and from season to season, and this variation may also be taken into account in assessing the probability of a match being correct. For example, the confidence in the accuracy of a match for a heating appliance may be higher in the winter than in the summer, and vice versa for a cooling appliance. The variation in frequency and intensity of use of such appliances over the course of a year may be taken into account. For example, a heater may be on continuously at a high power consumption level during winter months, and while it may also be on during spring months it is likely to be used less frequently and / or at a lower power consumption level.

By taking into account one or more of these further information sources it may be possible to identify an event series with a high degree of confidence in cases where matching of the event series alone gave a low probability of that appliance being present. Likewise, appliances that were assumed to be present based event matrix matching may in fact be found to be unlikely to be present or definitely not present when information from these further data sources is taken into account.

Identification of an appliance using a combination of electricity consumption data and other data is described above, however in one aspect of the invention an appliance may be matched based on a combination of measured data and inferred data in which electricity consumption data is only one possible form of measurable data that is not necessarily measured and used in order to identify an appliance. This combination may be a combination of measured data and inferred data or it may be a combination of two or more different types of measured data such as temperature and water consumption.

Moreover, it will be appreciated that use of these other data sources can provide information on consumption not only of electricity but also of other utilities, in particular gas and water.

User input

A library of matching appliances within a household identified using the measured data and / or inferred data may be updated with identified appliances in step 9, and communicated to the appliance user(s) in step 10, in particular to a website that the user may access, who may then verify the accuracy of the contents of the library. In particular, the user may confirm the presence of identified appliances, advise if an appliance is missing from the list, or advise if an item that appears on the list is in fact not present in the household. The contents of the library are thereby verified and updated.

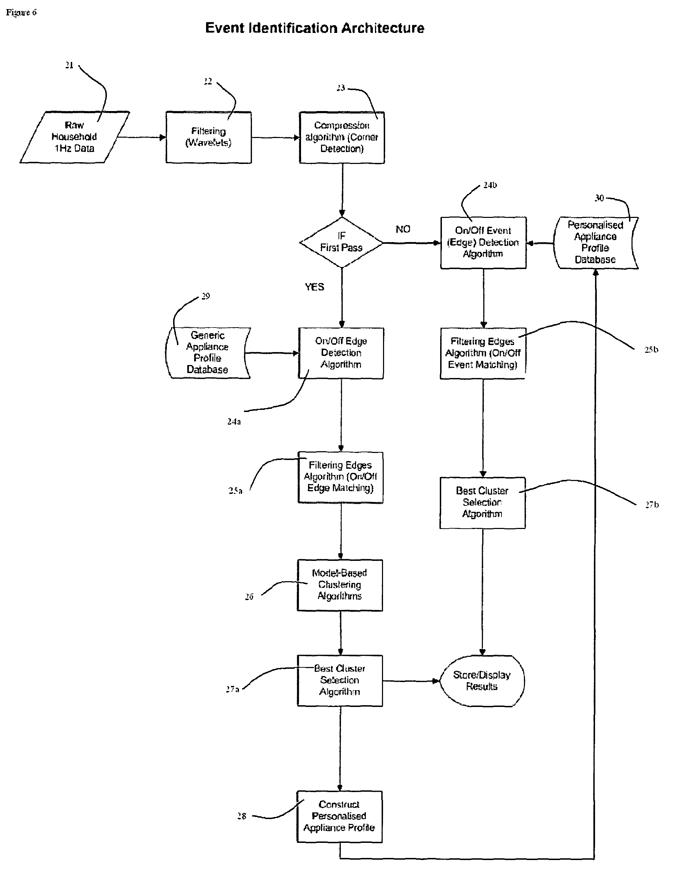

The method of the invention is illustrated in an alternative view in Figure 6, which provides more detail regarding some aspects of the invention, again with reference to electricity consumption. As discussed above, the method may be divided into three broad steps: (A) Measurement of electrical data at regular measurement points, in particular at regularly spaced time points; (B) Creation of an electricity consumption profile based in particular on changes in electricity demand, in particular power, between measurement points; and (C) Matching events within the measured electricity consumption profile to energy consumption profiles stored in a database and associated with a known event.

These three broad steps can be broken down into smaller components as shown in the Figure 6. In this particular visualization of the Event Identification Architecture, the above three broad steps are comprised of:

A) Measurement: Capture of the raw household 1Hz data step 21.
B) Profile Creation: Filtering (Wavelets) step 22, Compression Algorithm (Comer Detection) step 23, On/Off Edge Detection Algorithm steps 24a and 24b, Filtering Edges Algorithm (On/Off Edge Matching) step 25, and Generic Appliance Profile Database step 29.
C) Matching: Model-Based Clustering Algorithms step 26, Best Cluster Selection Algorithm steps 27a and 27b, Construct Personalised Appliance Profile step 28, and Personalised Appliance Profile Database step 30.

Each of these steps is described in more detail below. While the invention is described hereinafter primarily with respect to measurement and analysis of electricity consumption, in order to identify events and appliances associated with consumption of electricity, it will be appreciated that the same steps may equally be taken using data relating to consumption of gas or water utilities.

A1 Measurement

Measurement is carried out in step 21 in the same manner as is discussed above with reference to figure 1. As explained above, the measurement provides two separate data streams of real power and reactive power measurements taken at least once per second. In the illustrated example the measurements are taken once per second. Accordingly, the data streams comprise power measurements at a frequency of 1Hz.

B) Profile Creation

As shown in Figure 6, the electricity consumption data relating to real and reactive power is compressed by being fed into a filtering process in step 22, and then into a compression algorithm in step 23.

The filtering process of step 22 comprises de-noising the signal using appropriate techniques such as wavelet shrinkage. The use of a de-noising filtering process is particularly advantageous because in a real household supply there may be times when either the supply is inherently noisy or the particular devices in the home produce large power fluctuations as part of their normal mode of operation (for example PCs, TVs, ...). Wavelet shrinkage is a particularly effective method of carrying out the de-noising filtering. An example of a suitable wavelet shrinkage process by which this pre-processing, or "cleaning up", of the signal might be achieved is described in more detail in our co-pending UK patent application GB1012499.8.

The filtered and de-noised power data is then passed to a compression algorithm in step 23. The compression is carried out in the same manner as is discussed above with reference to Figure 1. The compression may be carried out using the corner detection algorithm discussed above with reference to Figures 2 to 5.

The next part of the process comprises splitting up the series of corner data output from the compression algorithm into On/Off edges using an On/Off edge detection algorithm in step 24. These On/Off edges are each defined by two corners, which delimit the start and finish of the edge, as shown, for example, in Figure 5. Unique pairs of On/Off edges will be paired to form events. These events will form the building blocks for subsequently identifying appliance parts and also complete appliances. An appliance may be composed of one or more different types of events (depending on the complexity of operation of the appliance), both in real and reactive power.

In order to detect the correct On/Off edges for each appliance event, we require a database of appliance profiles. On a first pass of the method when the details of the appliances present in the household are not known, a generic appliance profile database 29 is referred to by the On/Off edge detection algorithm in step 24a. The generic appliance profile database 29 contains records of parameters which define On/Off edges for specific appliance types or genera. These records of parameters are derived from comparisons of a wide variety of real and/or reactive power logs of different appliances and appliance modes of operations for each type or genera of appliance.

For example, by looking at a large number of different makes and models of washing machine and different cycles of operation of these washing machines, it is possible to extract a synthesis of parameters which are satisfied by all, or substantially all, washing machines.

These broad parameters of types of appliance in the generic appliance profile database 29 will generally produce a number of results, a subset of which should correspond to the appliance in question responsible for the measured event. The selection of the appropriate subset is described in section C) Matching, below.

Parameters associated with an On/Off edge that may be used to determine a match may be the same as are discussed above with reference to figure 1.

As explained above, these parameters may be determined by measuring event series of known appliances. Each of these parameters may be determined for each specific make and model of an appliance and / or may be a generic parameter to be used for any member of a genus of appliances (for example, the genus of washing machines) wherein the generic parameter is determined by measuring a plurality of devices within a genus and determining a parameter value that is applicable to most or all members of the genus.

The On/Off edge detection algorithm in step 24a uses the parameters defined in the generic appliance profile database 29 to search for possible On/Off edge pairs. The process used by the On/Off edge detection algorithm is illustrated schematically in Figure 5, which illustrates a matching step wherein a match may be based on one or more of: an event occurring at a first time point between T1 and T2; the event having an associated power falling between P1 and P2; and a time T until the next event being such that the next event occurs at a time point between T3 and T4. This process produces a number of potential On/Off edge pairs, some of which may be mapped many to one. That is, there may be many possible Off edges for a specific Off edge, or vice-versa.

For the next stage in the creation of a consumption profile, data regarding the On/Off edges detected by the On/Off edge detection algorithm in step 24a are supplied to an edge filtering algorithm for On/Off edge matching in step 25a. The On/Off edge matching takes all of the potential On/Off edge pairs that have been detected by the On/Off edge detection algorithm in the preceding step24a and operates on these to produce unique pairings, such that each On edge is unique, and is in turn matched uniquely to its corresponding unique Off edge. This matching produces unique On/Off edge pairings, which will be referrd to below as events, and which are used in the following section to determine the appliance detections.

The edge filtering algorithm carries out On/Off edge matching as follows. The electricity consumption profile, or potential On/Off edges, may be represented in the form of a matrix. For example, if a refrigerator was switched on during the period of electricity consumption measurement then the signature profile associated with that event may be as follows:

$$
\begin{array}{c}
\text{Event} \\[-4pt]
\text{Start} \qquad \text{Finish}
\end{array}
$$

$$
\text{Time} \longrightarrow \begin{bmatrix} 1 & 2 & 4 & 7 \end{bmatrix}
$$

The first entry in this event matrix represents the start index of the On edge, the second entry the finish of the On edge, the third entry the start of the Off edge, and the final entry the finish of the Off edge. The electricity consumption profile may be analysed to determine if it contains a signature event series stored in a database, in the case of step 25a, the generic appliance profile database 29, indicative of a refrigerator switching on. The event series of one or more candidate appliances stored in a database may be compared to the measured profile in order to identify whether the measured profile contains an event series matching that of a refrigerator switching on. Examples of measured parameters which may be compared include the real power magnitude, reactive power magnitude, duration of the On and/or Off edges, etc.

For any given event, the event series contained within the database comprises a plurality of entries showing at least one power change indicative of an event. Typically, the event comprises a plurality of changes in power value, the magnitude and duration of which can be used to generate a signature event series for that event. However, it is possible that a single change in power value could be stored as an event series within the database, in particular if the magnitude of that change is large enough to provide a distinctive event series.

## C) Matching

Once the candidate events, that is the identified On/Off edge pairs, have been determined in step 25a, the next part of the process involves partitioning the set of candidate events into groups by model-based clustering algorithms using finite mixtures model-based clustering in step 26. We may define our candidate events in a multitude of ways, an example would be taking the real power magnitude of the corresponding On edge and the duration of the event (or time difference between the corresponding On and Off). Then our set of events $y$ can be described in two coordinates $y_i = (p_i, d_i)$ where $p_i$ are the real power magnitudes of the On edges and $d_i$ the durations of the events. Our candidate events can therefore be plotted in a 2-dimensional graph, and will typically form groups or clusters.

To the skilled person it is readily apparent that one may add many more such parameters and dimensions if required in order to make the clustering more effective, in particular reactive power, harmonics, etc...may be included.

One particularly advantageous way of partitioning this set $y$ is using a technique known as finite mixtures model-based clustering. This is a technique which has two particularly important benefits: it can automatically determine both the best partitioning of the data set as well as determine the optimal number of groups within the data set. In other words it can be carried out automatically without requiring any human intervention or judgement to determine what the best split of the data into different clusters should be.

The high-level outline of the finite mixtures model-based clustering technique involves a model-based agglomerative clustering step, an Expectation-Maximization algorithm, as well as a Bayesian Information Criterion. The candidate event points are modelled using finite mixtures of general volume, shape and orientation, giving the optimal amount of flexibility for event identification purposes.

Given our set of events $y$ labelled by $y_1,...,y_n$ the likelihood for a mixture model with G components is given by:

$$
\mathcal{L}_{MIX}(\theta_1, ..., \theta_G; \tau_1, ..., \tau_G | y) = \prod_{i=1}^{n} \sum_{k=1}^{G} \tau_k \phi_k(y_i | \mu_k, \Sigma_k)
$$

Where $\tau_k$ is the probability that an observation belongs to the **k** th component $\left(\tau_k \geq 0; \sum_{k=1}^{G} \tau_k = 1\right)$,

and commonly the **k** th component of the mixture is given by

$$\phi_k(y_i|\mu_k, \Sigma_k) = \frac{\exp\left\{-\frac{1}{2}(y_i - \mu_k)^T \Sigma_k^{-1}(y_i - \mu_k)\right\}}{\sqrt{\det(2\pi\Sigma_k)}}$$

With $\mu_k$ and $\Sigma_k$ denoting the means and covariance matrices. Our data is therefore characterised by groups or clusters centred at the means $\mu_k$, with the geometric features (volume, shape and orientation) of the clusters determined by the covariances $\Sigma_k$.

We may parameterize the covariance matrices through eigenvalue decomposition in the following way:

$$\Sigma_k = \lambda_k D_k A_k D_k^T$$

Where $\lambda_k$ describes the volume of the cluster, $A_k$ its shape and $D_k$ its orientation. The idea of model-based clustering is to treat these as independent sets of parameters, and allow them to vary among clusters. It is particularly advantageous to treat the covariance matrix in as much generality as possible so as to allow for greater flexibility and effectiveness in modelling our data with such clusters. In particular, for best results no specific structure of the covariance matrix should be assumed. This is because potential clusters can be of any volume, shape and orientation.

Many further details on the general techniques of model-based clustering, describing the Expectation-Maximization process and the Bayesian Information Criterion, will be known to the skilled person in this field and can be found in the literature, and we will not describe these in detail herein.

The result of this process is to group events into clusters according to different properties, in our example using the magnitudes and durations of the events. If our appliance type is more complicated in nature, then each part will have candidate events which we will cluster and then combine using various techniques. The following section describes how to select the best cluster from amongst all possible choices.

In a typical result when doing appliance detection, there will be several clusters to choose from after the model-based clustering algorithms have partitioned the initial set of candidate events in step 26. The selection of the best cluster, that is, the most appropriate cluster, from these possible clusters is carried out using a best cluster selection algorithm in step 27a.

The selection of the most appropriate cluster in step 27a varies according to appliance type, but generally shares some similarities. In particular, the selection may make use of the following criteria:

i) Prima facie information: This criterion has to do with knowledge that may be based on having analyzed individual appliance types previously, across a broad range of models and modes of operation. This previous analysis may allow limits to be set on the geometry of the cluster to expect, and therefore aid in the filtering and selection process. In practice, this will involve setting limits on the parameters $\lambda_k$, $A_k$ and $D_k$, which describe the overall volume, shape and orientation of the clusters. For example, if it is known that the cluster for a kettle should be of a particular geometry, stretched in one direction but quite flat in the other, those parameters may be set accordingly. The clusters may also be tranked according to specific measures constructed from these geometric considerations, such that the measure is greatest when the geometry is the most appropriate. On a first pass, in step 27a, the best ranked cluster may be chosen as the candidate best cluster.

ii) Measured characteristics: Other characteristics of the events may also be calculated, such as the uncertainty and the periodicity for example. The uncertainty relates to how well the clustering was performed, and gives a quantitative measure that describes the degree of confidence that there may be that the data has been partitioned correctly. This is calculated using the finite mixtures which were used in the clustering process. An additional characteristic which may be measured is the periodicity of the events. This relates to whether or not the events are in a periodic group within their clusters and also across clusters. The time differences between events may also be looked at and a periodicity measure may be assigned to each event and cluster accordingly. So for example, kettle clusters should have low periodicity as the relation between events is fairly random, but oven or iron elements will have a high degree of periodicity since they are regulated automatically to cycle in a precise manner.

iii) Multi-part characteristics: In more complicated appliance types which are composed of multiple parts, further techniques may also be used in order to combine these parts successfully. It may be required that there be a particular density of events within a specified time period, or that the real and reactive power events be arranged in certain specific ways relating to the appliance type in question. In the case of a washing machine, for example, a plurality of discrete events can be identified in relation to operation of a washing machine, such as heating and spin cycle events. Individually, these are simple events, which can be detected independently. Independent analysis of these individual components can then be combined and further analysed to identify a washing machine. Using this information one can then define regions of washing machines, and use a similar method of clustering to determine the most likely heating element which corresponds to the washing machine. In principle the energy used, and temperature of the wash cycle, for example, could then be calculated.

iv) Other characteristics: Other user-input, household specific data, as well as socio-economic data, among others, may also be used in order to determine which cluster is the best. User-input could range from the user specifying what appliances they possess, to the specific times the appliance was used.

Once the appropriate cluster(s) have been selected, then those events will be taken as appliance events, and those parameters will be stored in step 28 in a personalised appliance profile database 30.

As will be explained below, the parameters stored in the personalised appliance profile database 30 may be used as a definition of the household appliance that has been detected.

Once it has been determined what the set of events that constitutes the appliance detections correspond to, in step 28 the determined appliance profiles may be stored in a personalised appliance profile database 30 may be constructed for use in future detections, as shown in Figure 6.

The determined parameters stored in the personalised appliance profile database 30 may be used in future real time detections. In such future detections, which are not a first pass, when the details of the appliances present in the household are known, the personalised appliance profile database 30 is referred to by the On/Off edge detection algorithm in step 24b. For the creation of a consumption profile, data regarding the On/Off edges detected by the On/Off edge detection algorithm in step 24b are supplied to the edge filtering algorithm for On/Off edge matching in step 25b. As previously discussed, the On/Off edge matching takes all of the potential On/Off edge pairs that have been detected by the On/Off edge detection algorithm in the preceding step 24b and operates on these to produce unique pairings, such that each On edge is unique, and is in turn matched uniquely to its corresponding unique Off edge. This matching produces unique On/Off edge pairings, which will be referrd to below as events, and which are used in the following section to determine the appliance detections.

The On/Off edge pairings produced in step 25b are then passed directly to the best cluster selection algorithm for selection of the most appropriate cluster in step 27b. The most appropriate cluster is then selected in the same manner as discussed above. In this case the use of model based clustering algorithms in step 26 is omitted as it is not required when using the personalised appliance profiles in the personalised appliance profile database 30. Thus, the need to carry out the computationally intensive clustering can be avoided in this situation.

Taking the results of the personalised appliance profiles, we may build up a database which will have information pertaining to individual households. This database will end up containing all the information required to specify the set of appliances within that household. These will remain largely the same until the day when the appliance is removed and a new appliance is bought. Then the whole process will restart, and the updated database will contain the new personalised individual appliance profile.

Summary

Different techniques can be used in identification of different appliance genera. Suitable techniques for any given genus will be apparent to the skilled person following measurement and analysis of event series for known appliances within each genus.

For example, a kettle profile can be characterised by an On edge, followed by a similar Off edge after a defined amount of time has elapsed (this amount of time is defined by parameters derived from typical kettle usage). Since kettles may be of different sizes, a broad search in On edge magnitudes and duration is firstly carried out in the electricity consumption data for the whole household, yielding matrices with all simple On/Off appliances satisfying those parameters. These results, since they tend to be different instances of appliance usage, tend to form clusters when one plots the On edge power magnitude against the duration in time between their respective On and Off edges. Then a finite mixtures model based clustering method may be used to automatically select the most likely candidate kettle cluster, as ex-plained in part B) above. Other secondary attributes can be calculated from this information, such as an estimate of the amount of water boiled in each kettle use.

Thus, in one embodiment an appliance may be detected by identifying an event associated with only part of the operation of that appliance. In particular, by measurement of event series associated with known devices, certain events may be identified as being more prominent than other events (for example due to a power change associated with that event that is particularly characteristic of the appliance genus in question) and may be used as the primary event in the process of appliance detection. Other events determined to be associated with the detected appliance may be used to verify the accuracy of the match and / or to determine parameters such as the amount of energy used by the appliance.

Thus, using information derived from measurement and analysis of electricity consumption profiles of known appliances, the skilled person may identify mathematical techniques suitable for identification of any given appliance or any appliance genus such as the finite mixtures model based clustering technique described above, or other techniques such as hidden Markov models.

In this way, use of known appliance event series for common household appliances allows estimation of most or all of the constituents of measured electricity consumption data for the entire household, and allows for disaggregation of signals associated with operation of more than one appliance.

The appliance may be any appliance to which power is supplied via mains electricity including but not limited to kitchen appliances such as fridges, freezers, microwave ovens, electrical cookers, washing machines, tumble dryers and dishwashers; leisure appliances such as televisions, hi-fis, set-top boxes, video or dvd players or recorders; game consoles; and other appliances such as electric boilers, central heating water pumps, pool pumps, air conditioning units, personal computers, vacuum cleaners, irons and lawn mowers.

Following an initial match of a measured event series to an event series stored in the database associated with a specific appliance, the confidence in accuracy of identification of that appliance may be increased by looking for one or more further event series corresponding to other events associated with operation of that appliance. Furthermore, certain appliances may have event series that occur cyclically, for example a refrigerator. If a match is identified for such an appliance then the match may be verified by checking for this cyclic pattern.

A detected event is not necessarily associated with operation of an appliance. For instance, a power cut or other abnormality in the power supply may possess an identifiable event series.

One or more databases may be checked for the purposes of event matching, in a similar manner to that described above with reference to Figure 1.

Multiple data sources may be used to identify and verify events, in a similar manner to that described above with reference to Figure 1.

A library of matching appliances within a household identified using the measured data and / or inferred data may be communicated to the appliance user(s), in a similar maner to that described above with reference to Figure 1.

Apparatus

Figure 6 illustrates apparatus for implementation of the method of the present invention comprising a sensor 61, a display 62, an up loader 63 and a back end 64.

Sensor 61 comprises an electricity measurement unit 611 and may be as described in WO 2008/142431.

The periodically measured values of real power (RP) and reactive power (REP) from the measurement unit 611 and associated time stamps are fed to a processor 612 where the compression code is applied using software running on the processor. Alternatively, the compression may be carried out by hardware in the form of an application specific integrated circuit (ASIC) in the sensor. Separately, for each time point the following measurements are fed from the measurement unit 611 into a control register 613 that that controls the sensor setup, in particular the sensor sampling rate:

- power readings at each time point
- cumulative energy at each time point
- Energy total for a time period (e.g. 24 hours), and maximum and minimum energy consumption during that time period.

The measured data is communicated wirelessly using communication means 614 to a portable user display 62, and from there via wired or wireless communication to a user's PC 63.

It will be appreciated that the compression of real and reactive power data dramatically reduces the amount of information communicated between components.

An uploader application installed on the user's PC 63 conducts a serial number check to determine which household the information originates from and then transfers the uploaded data via a network to a server 64 where time stamps associated with the measured data are used to give the actual time of day when measurements were made.

Finally, the back end 65 comprises an event identification device for processing the compressed data in order to identify events using the matching process described above.

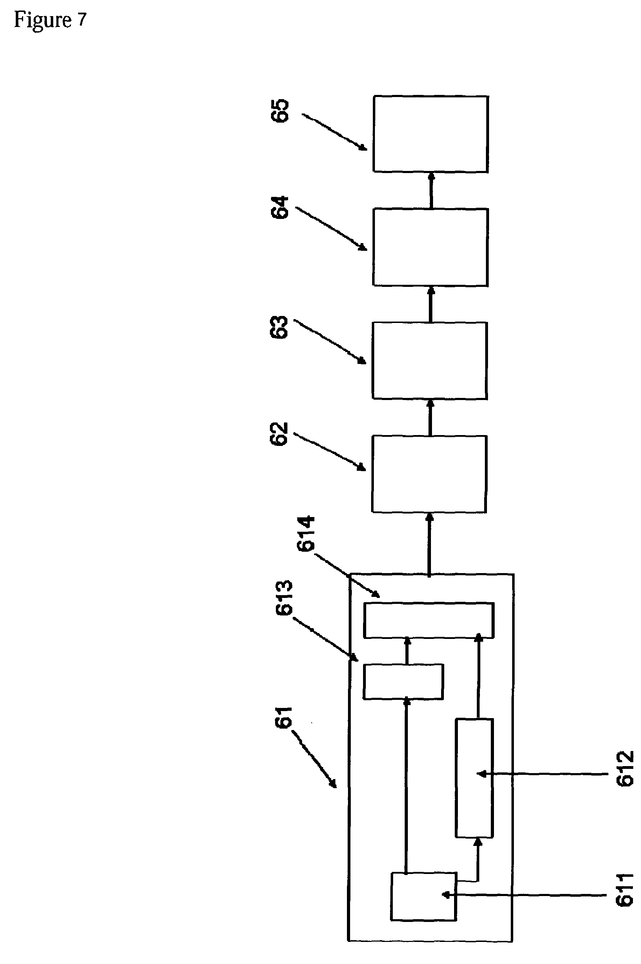

The event identification device is described in more detail in Figure 7. The compressed electricity consumption data 701 is fed to event identification device 700 where a matrix generator 704 forms a matrix of the data. This matrix is compared by processor 705 to matrices of event series contained in a database 706 in order to identify an event in the database matching the measured event. A match may be identified based solely on analysis of the electricity consumption data, however other data sources may be used to verify the accuracy of the match. These other data sources may be:

- Measured data 702, in particular data relating to consumption of other utilities. Data relating to consumption of other utilities may be compressed and provided in the form of a matrix in the same way as electricity consumption data, and compared to utility consumption profiles stored in database 706 or another database.
- Facts 703 regarding the household, for example facts provided by an occupier of the household regarding appliances present in the household.
- Probability data, for example the probability of a candidate appliance being in operation at the measured time of day. This probability data may be stored in database 706 or another database.

Processors 705 can take account of these further information sources in order to verify the accuracy of a match, or to discard a match if that match is incompatible with information from other data sources. Processors 705 would carry out the On/Off edge matching in steps 25a and 25b, the partitioning the set of candidate events into groups in step 26, the selection in steps 27a and 27b, and the storing the determined appliance profiles in step 28, as shown in and described with reference to the Event Identification architecture diagram of Figure 6.

Figure 6 illustrates a system wherein electricity consumption is measured and electricity consumption data is compressed and transmitted via user display 62 to an event identification device. In an alternative embodiment, measurement of electricity consumption, compression of electricity consumption data and event identification may take place within a single device, for example a device in communication with database 706, thus reducing or eliminating the need for a user to upload data transmitted from the sensor.

Use of identified events

The identified events can be used to populate a library of appliances for that household and, upon first use of the event identification device, this library may be communicated via a website to the user's PC for verification by the user of appliances identified within the household, and to illustrate to the user the patterns of usage and energy consumption by those appliances. Following this initial communication of the library, updates to the library may also be communicated to the user, for example if removal or addition of an appliance to the household is identified.

In addition, other measured data that was not used to form an event matrix such as energy consumed over the course of a day and minima and maxima in energy usage over the course of a day can be communicated to the user to provide a detailed picture of energy consumption within the household over the course of a day. The changes in energy usage over the course of a day can be linked to the appliances that were detected in operation during those times to provide the user with detailed energy consumption information, and the effect of different appliances on electricity consumption. Alternatively, or additionally, this data can be supplied to a utility provider or other party for analysis of the data for that single household alone, or in combination with data from one or more further households forming a database from which information such as behavioural patterns of users may be determined.

This data can be used to provide a very detailed picture of utility consumption within a household, including the time and frequency of use of appliances.

A target for energy consumption may be set using the measured data, either alone or in combination with other data such as by comparison with average consumption of other households or peer groups. In addition to setting a target for energy consumption, the data could be used to suggest behavioural changes, such as turning off devices that do not appear to be in active use or reducing use of appliances that are used more frequently than average.

Measured data may also be used to identify faulty appliances. For example, operation of a faulty appliance may give the same event series as a normal appliance but with higher power levels. A user may therefore be alerted to a potential fault in the appliance.

In addition to providing data that can be used to review and adjust consumption of utilities, the measured data may also be used to provide healthcare services. For example, a service may be provided to wlnerable individuals such as the elderly and / or individuals that live alone wherein the detection of a significant change in consumption of utilities triggers an alert to check on the wellbeing of those individuals. The significant change may be the occurrence or absence of a specific detectable event, such as a failure to detect use of a specific appliance within a specific time period, or a failure to detect use of any appliances at all for a specified length of time and / or within a specified time period.

The invention has been discussed with respect to event and appliance identification from measurements of electrical power consumption or demand which are measurements of real power and/or reactive power. The described event and appliance identification could additionally or alternatively be based on measurements of other power attributes, for example voltage, current, admittance, harmonic distortion, and the like.

The invention has been discussed primarily with respect to consumption of electricity, however it will be appreciated that the methods described herein can equally be applied to consumption of water or gas supplied to a household. For example, with respect to water it will be appreciated that operation of a washing machine or dishwasher will include identifiable water consumption event series. Moreover, other events such as use of a garden hose may be determined based on the volume of water and water flow rate. Each of these events may be verified using other data, such as time of use (for example, an event series that appears to be indicative of use of a garden hose may be given a lower probability of being accurate if it takes place at night). In this way, consumption of water and gas can be monitored and adjusted based on the data generated. Likewise, this data can provide other services, such as healthcare monitoring, either alone or in combination with electricity consumption data.

As shown by the above discussion, functions relating to the identification of an event using utility consumption data may be implemented on computers connected for data communication via the components of a packet data network. Although special purpose devices may be used, such devices also may be implemented using one or more hardware platforms intended to represent a general class of data processing device commonly used so as to implement the event identification functions discussed above, albeit with an appropriate network connection for data communication.

As known in the data processing and communications arts, a general-purpose computer typically comprises a central processor or other processing device, an internal communication bus, various types of memory or storage media (RAM, ROM, EEPROM, cache memory, disk drives etc.) for code and data storage, and one or more network interface cards or ports for communication purposes. The software functionalities involve programming, including executable code as well as associated stored data, e.g. files of known event profiles used for matching to a measured event profile. The software code is executable by the general-purpose computer that functions as the server or terminal device used for event identification. In operation, the code is stored within the general-purpose computer platform. At other times, however, the software may be stored at other locations and/or transported for loading into the appropriate general-purpose computer system. Execution of such code by a processor of the computer platform or by a number of computer platforms enables the platform(s) to implement the methodology for event identification, in essentially the manner performed in the implementations discussed and illustrated herein.

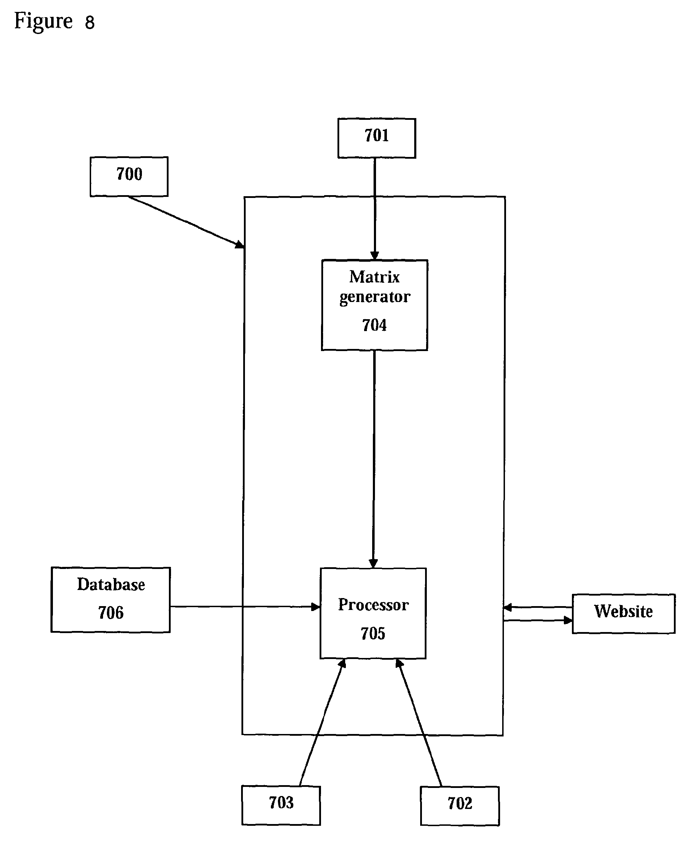

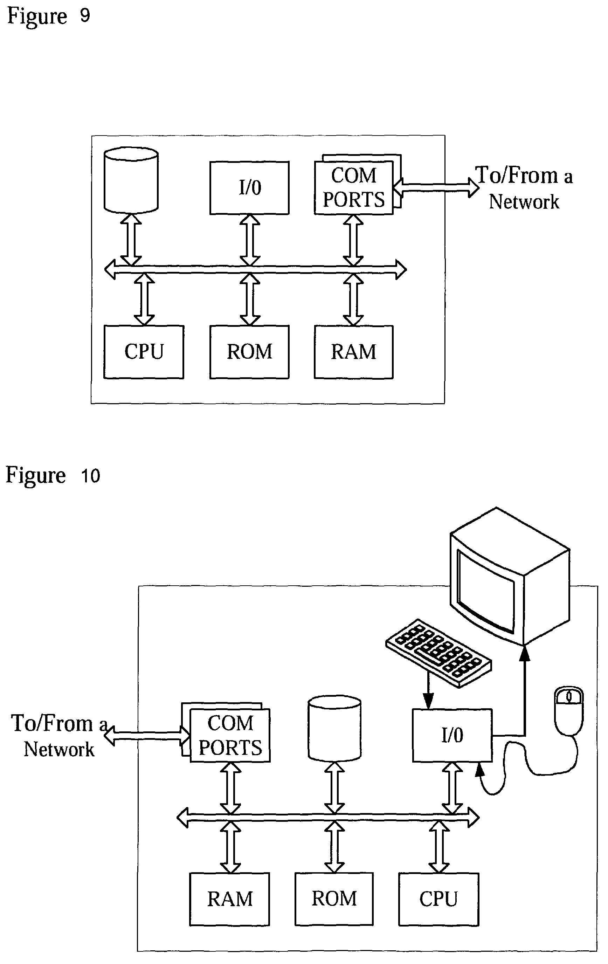

FIGS. 8 and 9 provide functional block diagram illustrations of general purpose computer hardware platforms. FIG. 8 illustrates a network or host computer platform, as may typically be used to implement a server. FIG. 9 depicts a computer with user interface elements, as may be used to implement a personal computer or other type of work station or terminal device, although the computer of FIG. 9 may also act as a server if appropriately programmed. It is believed that those skilled in the art are familiar with the structure, programming and general operation of such computer equipment and as a result the drawings should be self-explanatory.

A server, for example, includes a data communication interface for packet data communication. The server also includes a central processing unit (CPU), in the form of one or more processors, for executing program instructions. The server platform typically includes an internal communication bus, program storage and data storage for various data files to be processed and/or communicated by the server, although the server often receives programming and data via network communications. The user terminal computer will include user interface elements for input and output, in addition to elements generally similar to those of the server computer, although the precise type, size, capacity, etc. of the respective elements will often different between server and client terminal computers. The hardware elements, operating systems and programming languages of such servers are conventional in nature, and it is presumed that those skilled in the art are adequately familiar therewith. Of course, the server functions may be implemented in a distributed fashion on a number of similar platforms, to distribute the processing load.

Hence, aspects of the methods of event identification outlined above may be embodied in programming. Program aspects of the technology may be thought of as "products" or "articles of manufacture" typically in the form of executable code and/or associated data that is carried on or embodied in a type of machine readable medium and/or in a plurality of such media. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the organisation providing event identification services into the event identification computer platform. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the event identification, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Although the present invention has been described in terms of specific exemplary embodiments, it will be appreciated that various modifications, alterations and/or combinations of features disclosed herein will be apparent to those skilled in the art without departing from the scope of the invention as set forth in the following claims.

**Claims**

1. A method of identifying an event associated with consumption of a utility comprising the steps of:

   generating a utility consumption profile from utility consumption data, the utility consumption data comprising a plurality of utility consumption values measured at a corresponding plurality of measurement points;
   wherein generating the utility consumption profile comprises the step of determining a gradient of rate of change of utility consumption between consecutive measurement points; identifying measurement points at which a change in gradient exceeds a predetermined threshold; and storing in the utility consumption profile the utility consumption value at measurement points where the threshold is exceeded; and
   identifying an event within the utility consumption profile that matches the profile of an event stored in a database of utility consumption profiles.

2. A method according to claim 1 wherein the utility is electricity.

3. A method according to claim 2 wherein the measured electricity consumption data includes data of real power and/or data of reactive power.

4. A method according to any preceding claim wherein the plurality of measurement points are a plurality of time points with intervals therebetween.

5. A method according to claim 4 wherein the intervals between time points is in the range 0.01 - 60 seconds.

6. A method according to claim 4 or claim 5 wherein the utility consumption profile comprises consumption values at the plurality of time points, and further comprising the steps of;
   comparing the utility consumption values and time values of consecutive measurement points, and if both the difference in utility consumption value and the difference in time value fall outside respective defined values, identifying that a measurement point is missing;
   determining the utility consumption value and time value of the missing measurement point from the values of the stored measurement points by linear interpolation; and
   storing in the utility consumption profile the determined values of the missing measurement point.

7. A method according to any preceding claim wherein the matching of the utility consumption profile comprises a clustering method.

8. A method according to claim 7 wherein the clustering method comprises a finite mixtures model based clustering method.

9. A method according to claim 7 or claim 8, when dependent from any one of claims 4 to 6, wherein the clustering method is carried out on the parameters event power magnitude and duration in time between on and off events.

10. A method according to any preceding claim wherein the database comprises a one or more of:

    a generic appliance database comprising profiles associated with genera of appliances;
    a specific appliance database comprising profiles associated with specific appliances; and
    a database specific to a setting that receives the consumed utility comprising profiles associated with previously identified events or appliances.

11. A method according to any preceding claim wherein the generated utility consumption profile is analysed to identify an event matching a utility consumption profile stored in the database and associated with operation of an appliance that consumes the utility.

12. A method according to any of claims 1 to 10 wherein the generated utility consumption profile is analysed to identify an event matching a utility consumption profile stored in the database and associated with operation of a component of an appliance that consumes the utility.

13. A method according to claim 12 wherein the operation of components are combined and analysed to identify an appliance that consumes the utility.

14. Computer program code which when run on a computer causes the computer to perform the method according to any preceding claim.

15. Computer-implemented event identification apparatus comprising:

    a profile generator for generating a utility consumption profile from utility consumption data, the utility consumption data comprising a plurality of utility consumption values measured at a corresponding plurality of time points; wherein generating the utility consumption profile comprises the step of determining a gradient of rate of change of utility consumption between consecutive measurement points; identifying measurement points at which a change in gradient exceeds a predetermined threshold; and storing in the utility consumption profile the utility consumption value at measurement points where the threshold is exceeded; and
    an event identifier for identifying an event within the utility consumption profile that matches the profile of an event stored in a database of utility consumption profiles.

**Patentansprüche**

1. Verfahren zur Identifizierung eines Ereignisses, das mit dem Verbrauch eines Mediums verbunden ist, die folgenden Schritte umfassend:

    Erstellen eines Medienverbrauchsprofils aus Medienverbrauchsdaten, wobei die Medienverbrauchsdaten eine Vielzahl von Medienverbrauchswerten umfassen, die an einer entsprechenden Vielzahl von Messpunkten gemessen werden;
    wobei das Erstellen des Medienverbrauchsprofils den Schritt des Bestimmens eines Gradienten der Änderungsrate des Medienverbrauchs zwischen aufeinanderfolgenden Messpunkten; des Identifizierens von Messpunkten, an denen eine Änderung des Gradienten eine festgelegte Schwelle überschreitet; und des Speicherns des Medienverbrauchswertes an Messpunkten, an denen die Schwelle überschritten wird, im Medienverbrauchsprofil umfasst; und
    Identifizieren eines Ereignisses innerhalb des Medienverbrauchsprofils, das mit dem Profil eines Ereignisses übereinstimmt, das in einer Medienverbrauchsprofil-Datenbank gespeichert ist.

2. Verfahren nach Anspruch 1, wobei das Medium Strom ist.

3. Verfahren nach Anspruch 2, wobei die gemessenen Stromverbrauchsdaten Wirkleistungsdaten und/oder Blindleistungsdaten umfassen.

4. Verfahren nach einem der vorhergehenden Ansprüche, wobei die Vielzahl von Messpunkten eine Vielzahl von Zeitpunkten mit Intervallen dazwischen ist.

5. Verfahren nach Anspruch 4, wobei die Intervalle zwischen den Zeitpunkten sich im Bereich von 0,01 bis 60 Sekunden befinden.

6. Verfahren nach Anspruch 4 oder 5, wobei das Medienverbrauchsprofil Verbrauchswerte an der Vielzahl von Zeitpunkten umfasst und ferner die folgenden Schritte umfasst:

Vergleichen der Medienverbrauchswerte und der Zeitpunkte aufeinanderfolgender Messpunkte und, wenn sowohl die Differenz der Medienverbrauchswerte als auch die Differenz der Zeitwerte außerhalb jeweils definierter Werte liegen, Identifizieren, dass ein Messpunkt fehlt;
Bestimmen des Medienverbrauchswertes und des Zeitwertes des fehlenden Messpunktes aus den Werten der gespeicherten Messpunkte durch lineare Interpolation; und
Speichern der bestimmten Werte des fehlenden Messpunkts im Medienverbrauchsprofil.

7. Verfahren nach einem der vorhergehenden Ansprüche, wobei das Abgleichen des Medienverbrauchsprofils ein Cluster-Verfahren umfasst.

8. Verfahren nach Anspruch 7, wobei das Cluster-Verfahren ein auf einem finiten Mischmodell basierendes Cluster-Verfahren umfasst.

9. Verfahren nach Anspruch 7 oder 8, wenn abhängig von einem der Ansprüche 4 bis 6, wobei das Cluster-Verfahren auf der Grundlage der Parameter Ereignis-Strommagnitude und Dauer in Zeit zwischen Ein- und Aus-Ereignissen ausgeführt wird.

10. Verfahren nach einem der vorhergehenden Ansprüche, wobei die Datenbank eine oder mehrere von:

einer generischen Vorrichtungsdatenbank, die Profile umfasst, die Vorrichtungsgattungen zugeordnet sind;
einer spezifischen Vorrichtungsdatenbank, die Profile umfasst, die spezifischen Vorrichtungen zugeordnet sind; und
einer Datenbank, die spezifisch für eine Einstellung ist, die das verbrauchte Medium empfängt, und die Profile umfasst, die zuvor identifizierten Ereignissen oder Vorrichtungen zugeordnet sind,
umfasst.

11. Verfahren nach einem der vorhergehenden Ansprüche, wobei das erstellte Medienverbrauchsprofil analysiert wird, um ein Ereignis zu identifizieren, das mit einem Medienverbrauchsprofil übereinstimmt, das in der Datenbank gespeichert und dem Betrieb einer Vorrichtung, die das Medium verbraucht, zugeordnet ist.

12. Verfahren nach einem der Ansprüche 1 bis 10, wobei das erstellte Medienverbrauchsprofil analysiert wird, um ein Ereignis zu identifizieren, das mit einem Medienverbrauchsprofil übereinstimmt, das in der Datenbank gespeichert und dem Betrieb einer Komponente einer Vorrichtung, die das Medium verbraucht, zugeordnet ist.

13. Verfahren nach Anspruch 12, wobei der Betrieb der Komponenten kombiniert und analysiert wird, um eine Vorrichtung zu identifizieren, die das Medium verbraucht.

14. Computerprogrammcode, der, wenn er auf einem Computer ausgeführt wird, den Computer dazu veranlasst, das Verfahren gemäß den vorhergehenden Ansprüchen auszuführen.

15. Computerimplementierte Ereignisidentifikationsvorrichtung, Folgendes umfassend:

einen Profilgenerator zum Erstellen eines Medienverbrauchsprofils aus Medienverbrauchsdaten, wobei die Medienverbrauchsdaten eine Vielzahl von Medienverbrauchswerten umfassen, die an einer entsprechenden Vielzahl von Zeitpunkten gemessen werden;
wobei das Erstellen des Medienverbrauchsprofils den Schritt des Bestimmens eines Gradienten der Änderungsrate des Medienverbrauchs zwischen aufeinanderfolgenden Messpunkten; des Identifizierens von Messpunkten, an denen eine Änderung des Gradienten eine festgelegte Schwelle überschreitet; und des Speicherns des Medienverbrauchswertes an Messpunkten, an denen die Schwelle überschritten wird, im Medienverbrauchsprofil umfasst; und

eine Ereigniskennung zum Identifizieren eines Ereignisses innerhalb des Medienverbrauchsprofils, das mit dem Profil eines Ereignisses übereinstimmt, das in einer Medienverbrauchsprofil-Datenbank gespeichert ist.

**Revendications**

1. Procédé d'identification d'un évènement associé à la consommation d'un service comprenant les étapes de :

   génération d'un profil de consommation de service à partir de données de consommation de service, les données de consommation de service comprenant une pluralité de valeurs de consommation de service mesurées à une pluralité correspondante de points de mesure ;
   dans lequel le profil de consommation de service comprend les étapes de déterminer un gradient de taux de changement de profil de consommation de service entre des points de mesure consécutifs, identifier des points de mesure où un changement de gradient dépasse un seuil prédéterminé, stocker dans le profil de consommation de service la valeur de consommation de service où le seuil est dépassé, et identifier un évènement dans le profil de consommation de service qui correspond au profil d'un évènement stocké dans une base de données de profils de consommation de service.

2. Procédé selon la revendication 1, dans lequel le service est l'électricité.

3. Procédé selon la revendication 2, dans lequel les données mesurées de consommation d'électricité incluent des données de puissance réelle et/ou des données de puissance réactive.

4. Procédé selon l'une quelconque des revendications précédentes dans lequel la pluralité des points de mesure est une pluralité d'instants avec des intervalles entre eux.

5. Procédé selon la revendication 4, dans lequel les intervalles entre les instants de mesure est dans la gamme entre 0,01 et 60 s.

6. Procédé selon la revendication 4 ou 5, dans lequel le profil de consommation de service comprend des valeurs de consommation en une pluralité d'instants de mesure, et comprenant en outre les étapes de :

   comparer les valeurs de consommation de service et les valeurs de temps de points de mesure consécutifs, et si les deux différences des valeurs de consommation de service et des valeurs de temps de points de mesure sortent des valeurs respectives définies, identifier qu'un point de mesure manque ;
   déterminer la valeur de consommation de service et la valeur de temps de points de mesure des valeurs des points de mesure stockés par interpolation linéaire ; et
   stocker dans le profil de consommation de service les valeurs déterminées dans le point de mesure manquant.

7. Procédé selon l'une quelconque des revendications précédentes dans lequel l'établissement de correspondance du profil de consommation de service comprend un procédé de groupage.

8. Procédé selon la revendication 7, dans lequel le procédé de groupage comprend un modèle de regroupement.

9. Procédé selon la revendication 7 ou 8, dépendant de l'une quelconque des revendications 4 à 6, dans lequel le procédé de groupage est effectué sur les paramètres magnitude de puissance d'évènement et durée entre les évènements allumage et extinction.

10. Procédé selon l'une quelconque des revendications précédentes dans lequel la base de données comprend un ou plusieurs parmi :

    une base de données générique d'appareils comprenant des profils associés à des genres d'appareils ;
    une base de données générique d'appareils comprenant des profils associés à des appareils spécifiques ; et
    une base de données spécifique à un réglage qui reçoit les profils comprenant le service consommé associés à des évènements ou des appareils précédemment identifiés.

11. Procédé selon l'une quelconque des revendications précédentes dans lequel le profil de consommation de service généré sert à identifier un évènement correspondant à un profil de consommation de service stocké dans la base de données et associé au fonctionnement d'un appareil qui consomme le service.

**12.** Procédé selon l'une des revendications 1 à 10 dans lequel le profil de consommation de service généré est analysé pour identifier un évènement correspondant à un profil de consommation de service stocké dans la base de données et associé au fonctionnement d'un appareil qui consomme le service.

**13.** Procédé selon la revendication 12 dans lequel le fonctionnement de composants est combiné et analysé pour identifier un appareil qui consomme le service.

**14.** Code de programme informatique qui, quand on le fait fonctionner sur un ordinateur, amène l'ordinateur à effectuer le procédé selon l'une quelconque des revendications précédentes.

**15.** Appareil d'identification d'évènement mis en oeuvre par ordinateur comprenant :

un générateur de profils pour générer un profil de consommation de service à partir de données de consommation de service, les données de consommation de service comprenant une pluralité de valeurs de consommation de service mesurées à une pluralité correspondante d'instants de mesure ;
dans lequel générer le profil de consommation de service comprend les étapes de déterminer un gradient de taux de changement de profil de consommation de service entre des points de mesure consécutifs, identifier des points de mesure où un changement de gradient dépasse un seuil prédéterminé, stocker dans le profil de consommation de service la valeur de consommation de service où le seuil est dépassé, et identifier un évènement dans le profil de consommation de service qui correspond au profil d'un évènement stocké dans une base de données de profils de consommation de service.

## Figure 1

```
        ┌─────────────────────┐
        │   Measure real and  │────────  1
        │    reactive power   │
        └─────────────────────┘
                   │
                   ▼
        ┌─────────────────────┐
        │    Compress data;   │────────  2
        │    identify corners │
        └─────────────────────┘
                   │
                   ▼
        ┌─────────────────────┐
        │    Check for missing│────────  3
        │  corners and correct│
        └─────────────────────┘
                   │
                   ▼
        ┌─────────────────────┐
        │   Generate event    │────────  4
        │    series matrix    │
        └─────────────────────┘
                   │
  5 ─┐             ▼
     └─┌───────────────────────────────┐
       │  Compare candidate event matrix│◄──────────────────┐  7
       │    to measured event matrix    │                   │
       └───────────────────────────────┘                   │
                   │                                         │
                   ▼                                ┌─────────────────┐
              ╱──────────╲          N               │   Select next   │
  6 ────────╱ Is there a  ╲──────────────────────►  │ candidate event │
            ╲ match        ╱                         └─────────────────┘
             ╲reaching the╱                                  ▲
              ╲threshold? ╱                                  │
                 ╲──────╱                                    │
                   │ Y                                       │
                   ▼                                         │
        ┌─────────────────────┐                              │
  8 ───│ Verify matches using │                              │
        │ other information    │                              │
        │      sources         │                              │
        └─────────────────────┘                              │
                   │                                          │
                   ▼                                          │
        ┌─────────────────────┐                              │
  9 ───│   Add matches to     │──────────────────────────────┘
        │  household library   │
        └─────────────────────┘
                   │
                   ▼
        ┌─────────────────────┐
 10 ───│      Request         │
        │  confirmation of     │
        │  matches from user   │
        └─────────────────────┘
```

Figure 2

Figure 3

# Figure 4

Figure 5

Figure 6

## Event Identification Architecture

Figure 7

# Figure 8

Figure 9

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008142431 A

- GB 1012499 A

**Non-patent literature cited in the description**

- NONINTRUSIVE APPLIANCE LOAD MONITORING. **HART G W.** PROCEEDINGS OF THE IEEE. IEEE, 01 December 1992, vol. 80, 1870-1891